(19) Europäisches Patentamt

European Patent Office

Office européen des brevets

(11) **EP 1 503 599 A2**

(12) **EUROPEAN PATENT APPLICATION**

(43) Date of publication:
**02.02.2005 Bulletin 2005/05**

(51) Int Cl.$^7$: **H04N 7/36**

(21) Application number: **04254443.7**

(22) Date of filing: **22.07.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **29.07.2003 KR 2003052430**

(71) Applicant: **Samsung Electronics Co., Ltd.
Suwon-si, Gyeonggi-do 442-742 (KR)**

(72) Inventors:
• **Lee, Sung-hee
Suwon-si Gyeonggi-do (KR)**
• **Kwon, Oh-jae
Anyang-si Gyeonggi-do (KR)**

(74) Representative: **Geary, Stuart Lloyd et al
Venner Shipley LLP
20 Little Britain
London EC1A 7DH (GB)**

(54) **Block motion vector estimation**

(57) A motion estimation apparatus and a method considers a correlation between blocks. The motion apparatus includes a full search unit which divides a current frame/field into blocks of predetermined size and estimates an arbitrary motion vector of each block by a full search algorithm; a candidate motion vector estimating unit which computes a plurality of motion prediction error values by applying a block matching algorithm (BMA) to a current block and estimates candidate motion vectors from motion prediction error values below a predetermined threshold; a motion compensating unit which computes a correlation between respective candidate motion vectors and the motion vectors of adjacent blocks and compensates one among the candidate motion vectors to a final motion vector of the current block based on the computed correlation. By estimating motion vector of the current block in consideration of the correlation between the blocks, images free of block artefact can be provided.

FIG. 2

EP 1 503 599 A2

**Description**

The present invention relates to a method of block motion vector estimation for a video signal and a block motion vector estimator.

In a process, such as frame rate up-conversion (FRC) or interlaced to progressive conversion (IPC), motion estimation between image frames is essential. Motion estimation estimates motion vectors for motion compensation and is usually performed using a block matching algorithm (BMA).

The BMA compares two successively input frames or fields in a block unit, and estimates a single motion vector for each block. The motion vector is estimated using a motion prediction error value, such as the sum of absolute difference (SAD) metric, and used in the motion compensation process.

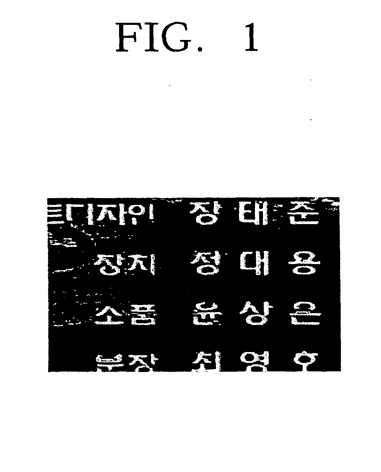

In conventional motion estimation, motion vectors, estimated for respective blocks, are often inaccurate and there block artefacts occur in the interpolated frames or fields, as shown in Figure 1. The block artefacts make the image appear blocky to viewers. The block artefact phenomenon occurs mainly because the motion compensation is performed using estimated motion vectors without considering the correlation with adjacent blocks.

The present invention has been developed in order to solve the above drawbacks and other problems associated with the conventional arrangement.

A method, according to the present invention, is characterised by comparing candidate motion vectors for a current block with motion vectors of neighbouring blocks and selecting a candidate motion vector as the final motion vector estimation for said current block.

The motion vectors of neighbouring blocks may be determined by determining the most similar block in the preceding field or frame, e.g. the motion vector producing the minimum SAD. Preferably, however, the motion vectors of some of the neighbouring blocks are determined by determining the most similar block in the preceding field or frame, e.g. the motion vector producing the minimum SAD, and the motion vectors of others of the neighbouring blocks are obtained previously by comparing candidate motion vectors for a current block with motion vectors of neighbouring blocks and selecting a candidate motion vector as the final motion vector estimation for said current block.

Preferably, said comparing of candidate motion vectors for a current block with motion vectors of neighbouring blocks comprises determining the candidate motion vector for which the motion vectors of the neighbouring blocks exhibit the minimum mean, which may be a weighted mean, deviation. If the same number of neighbouring blocks is always used, the sum of the differences need not be divided by the number of neighbouring blocks in order to determine which candidate value would produce the smallest mean.

A block motion vector estimator, according to the present invention, is characterised by means configured for performing a method according to the present invention.

Preferred and optional features are set out in claims 3 to 27 appended hereto.

Embodiments of the present invention will now be described, by way of example, with reference to the accompanying drawings, in which:

Figure 1 illustrates block artefacts in an image;
Figure 2 is a block diagram of a first motion estimation apparatus according to the present invention;
Figure 3 is a block diagram illustrating a current block and neighbouring blocks;
Figure 4 illustrates the correlation computing unit of Figure 2 computing the correlation between the blocks, with considering a temporal direction;
Figure 5 illustrates an exemplary case in which the weight allocating unit of Figure 2 allocates weights to two-differently-moving objects;
Figure 6 is a view illustrating an exemplary image in which block artefact is reduced by the motion estimation apparatus of Figure 2;
Figure 7 is a flowchart for schematically illustrating the motion estimation process carried out by the apparatus of Figure 2;
Figure 8 is a block diagram illustrating a motion estimation apparatus which considers a correlation between the blocks according to a second exemplary embodiment of the present invention;
Figure 9 is a view illustrating an exemplary case in which a final motion vector is computed using the average vector which is computed by the average vector computing unit of Figure 8;
Figure 10 is a view illustrating a simulation example of an image in which a block artefact is reduced by the apparatus of Figure 8; and
Figure 11 is a flowchart for schematically illustrating the motion estimation method carried out by the apparatus of Figure 8.

Well-known functions and constructions are not described in detail since they would obscure the invention in unnecessary detail.

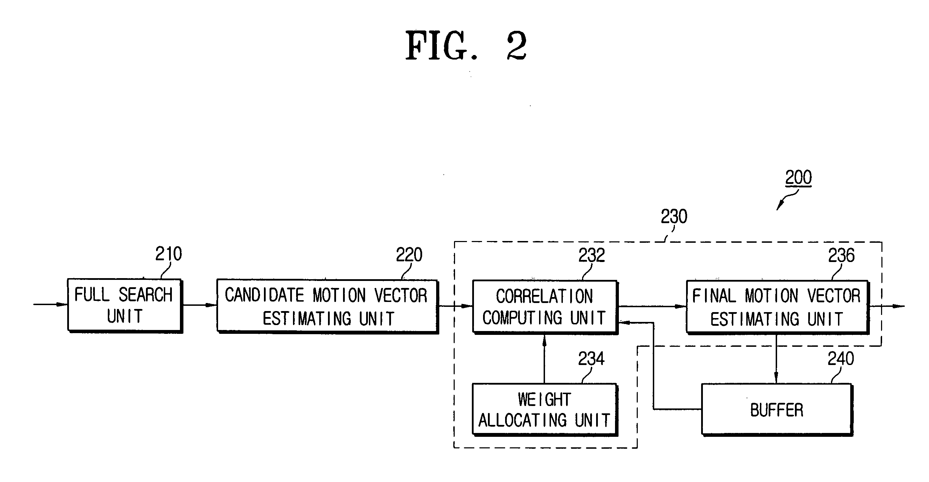

Referring to Figure 2, a motion estimation apparatus 200 includes a full search unit 210, a candidate motion vector estimating unit 220, a motion compensating unit 230 and a buffer 240.

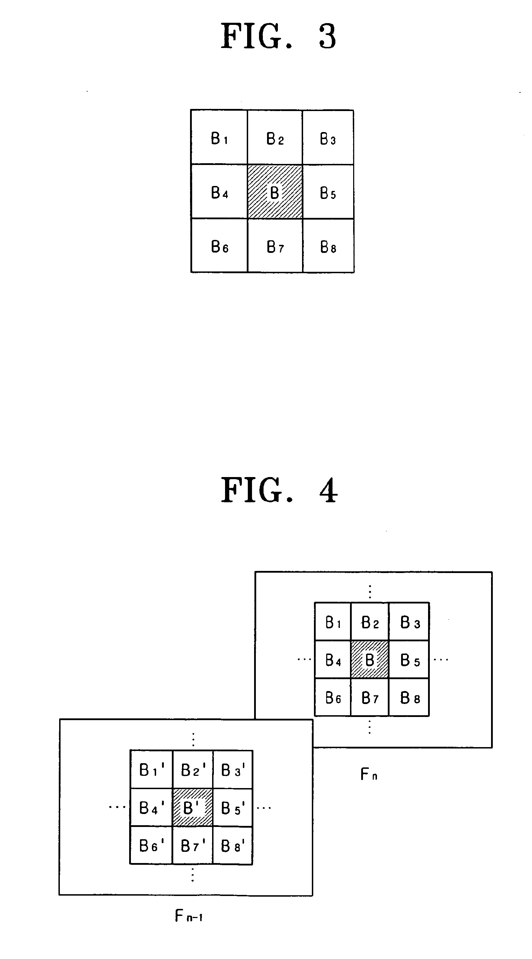

Referring to Figure 3, 'B' indicates the current block of the current frame/field and 'B1' to 'B8' indicate the adjacent blocks surrounding the current block B.

The full search unit 210 divides the current frame/field (hereinafter briefly called 'current frame') into blocks of a predetermined size and estimates a motion vector for each block. In the present specific embodiment, BMA is applied to the respective blocks to compute motion prediction errors. The full search unit 210 estimates a motion vector for each block from the position having the minimum motion prediction error.

The motion prediction error can be computed in various ways including the sum of absolute difference (SAD), the mean absolute difference (MAD) and the mean square error (MSE). In this specific embodiment which uses SAD, the motion prediction error will be referred to as the SAD. However, it should be noted that the motion vectors of respective blocks can be estimated by other appropriate techniques instead of BMA.

The candidate motion vector estimating unit 220 estimates a candidate motion vector of the current block B using a prescreening process. More specifically, the candidate motion vector estimating unit 220 estimates at least one candidate motion vector for the current block B by re-applying the BMA to the current block B.

Describing the above in more detail with reference to the current block B, the candidate motion vector estimating unit 220 sets a predetermined search range in a previous frame/field (hereinafter briefly called 'previous frame'), and computes a plurality of SADs by applying the BMA to the predetermined search range. The candidate motion vector estimating unit 220 then estimates the candidate motion vectors of the current block B, from the locations that correspond to a SAD below a predetermined threshold. The number of candidate motion vectors is equal to the number of SADs below the predetermined threshold. In the present embodiment, the value obtained by multiplying the minimum of the SADs by a predetermined constant $\alpha$, $a \times \minimum\ SAD$, is used as the predetermined threshold.

This is to consider the possibility that a motion vector representing the actual movement of the current block B is contained in the candidate motion vectors having SADs below $a \times \minimum\ SAD$ threshold and, thus, to have a more accurate final motion vector for the current block. For example, the present embodiment may use $\alpha$ =1.5. Of course, this value can be adjustable as necessary.

The motion compensating unit 230 includes a correlation computing unit 232 and a final motion vector estimating unit 236.

The correlation computing unit 232 computes the correlation between at least one estimated candidate motion vector and the motion vectors of the adjacent blocks B1 to B8. The correlation computing unit 232 measures the correlation between the candidate motion vectors, estimated by pre-screening, and the motion vectors of the adjacent blocks B1 to B8. A vector distance is used as the measure for the computation of correlation between vectors and the correlation is computed in accordance with the following formula:

[Formula 1]

$$C(v_c) = \frac{1}{D(v_c)} = \frac{1}{\sum\limits_{k}|v_c - v_k|}, \quad k = 1,2,3,...,M$$

in which, $C(v_c)$ is the correlation between the candidate motion vectors and the conventional minimum SAD motion vectors of the adjacent blocks B1 to B8, $D(v_c)$ is the vector distance, $v_c$ is a candidate motion vector, $v_k$ is a motion vector of the adjacent blocks $B_1$ to $B_8$, and M is the number of adjacent blocks $B_1$ to $B_8$. The adjacent blocks $B_1$ to $B_8$ refer to the blocks that are adjacent to the current block B, which are, when considering the spatial correlation alone, located in the same current frame as the current block B (see Figure 3). It should be noted that the motion vectors of blocks B1 to B8 are simply the motion vectors obtained by determining the respective minimum SADs not motion vectors selected from candidate motion vectors.

Referring to Formula 1, the correlation is in inverse proportion to $D(v_c)$ and accordingly, the correlation increases as $D(v_c)$ decreases.

In addition to the spatial domain, the correlation computing unit 232 can also compute the correlation in the temporal domain, which is illustrated in Figure 4. Accordingly, the correlation computing unit 232 computes spatial and temporal correlation, considering the motion vector of a previous block B' of the previous frame $F_{n-1}$ which corresponds

in location to the current block B, and the motion vectors of at least one of adjacent blocks $B_1'$ to $B_8'$ surrounding the previous block B'. The previous frame $F_{n-1}$ refers to a frame which is input prior to the current frame $F_n$.

Accordingly, not only the adjacent blocks $B_1$ to $B_8$ as shown in Figure 3, but also at least one block $B_1'$ to $B_8'$ of the previous block B' is determined to be the adjacent block to the current block B. As for the motion vectors of the blocks of the previous frame, the motion vectors of the respective blocks, which have already been estimated by a final motion vector estimating unit 236 (described later), are used.

The number of adjacent blocks used by the correlation computing unit 232 can be adjusted adaptively in accordance with the frequency of the image sampling and the size of the blocks. For example, with a higher sampling frequency (or resolution) and with smaller size blocks, the adjacent blocks used by the correlation computing unit 232 are expandable temporally and spatially.

Based on the correlation computed according to Formula 1, the final motion vector estimating unit 236 determines the candidate motion vector having a maximum correlation to be the final motion vector of the current block B. Accordingly, as the motion vector of the current block, which is estimated by the full search unit 210 through the BMA, is compensated by using a correlation with the adjacent blocks $B_1$ to $B_8$ and/or $B_1'$ to $B_8'$, the final motion vector is estimated.

The final motion vectors of the respective blocks of the current frame, which are estimated by the final motion vector estimating unit 236, are temporarily stored in the buffer 240 in the frame unit. The temporarily-stored final motion vectors are used for the correlation computing unit 232 for the temporal correlation. That is, the temporarily-stored final motion vectors of the respective blocks of the current frame are used for estimating the final motion vectors of the blocks of the next frame.

The correlation computing unit 232 may apply weights in accordance with the similarity between the current block B and the respective adjacent blocks $B_1$ to $B_8$. To this end, the motion compensating unit 230 may further include a weight allocating unit 234.

The weight allocating unit 234 computes a weight in accordance with the similarity between the current block B and the adjacent blocks $B_1$ to $B_8$. The weight allocating unit 234 allocates a larger weight to the adjacent blocks $B_1$ to $B_8$, which have more similar image characteristics to the current block B. The similarity of the image characteristics is the measure which determines whether the current block B and the adjacent blocks $B_1$ to $B_8$ belong to the categories of identical motion, similar motion or different motion.

The weight allocating unit 234 determines the similarity between the current block B and the adjacent blocks $B_1$ to $B_8$ in terms of image characteristics, using metrics such as gradient, texture, pixel average and pixel dispersion. For example, the weight allocating unit 234 computes the gradients of the current block B and the adjacent blocks $B_1$ to $B_8$, and allocates a weight which is in inverse proportion to the gradient difference. Accordingly, the current block B and the adjacent blocks $B_1$ to $B_8$ are determined to be more similar to each other because the difference between the metrics is smaller. In order to compute the weight, the weight allocating unit 234 is provided with the pixel information for the current frame and/or the previous frame, i.e., with the brightness values of their pixels. In the cases of the other metrics such as the texture, average value and dispersion, the weight allocating unit 234 also allocates weights in inverse proportion to the differences.

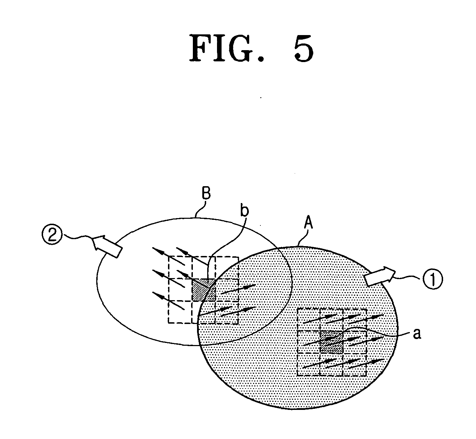

Allocating the weights is especially useful in estimating the motion vectors of the blocks of two differently-moving objects (see Figure 5).

Referring to Figure 5, with respect to an object A moving in direction (1), the current block (a) and the adjacent blocks have vector properties in the same direction. Accordingly, in compensating the motion vector of the current block (a), which is relatively inaccurate due to noise influence, the motion compensating unit 230 can compensate the motion vector of the current block (a) without using a weight, by using the motion vectors of the adjacent blocks.

Meanwhile, an object B is moving in direction (2). In the case of compensating the motion vector of the current block (b), where the two objects A and B, having different moving directions, overlap because the adjacent blocks belong to different objects A and B, motion compensation may not be performed with accuracy. In this case, the motion compensating apparatus 230 allocates a larger weight to the motion vectors of the adjacent blocks that have more similar image characteristics to the current block (b). As a result, motion compensation can be performed more accurately. That is, by allocating more weight to more similar adjacent blocks, the motion compensation can be performed more accurately.

Of course, the weights can be used not only for the differently-moving objects but also for two similarly or identically-moving objects.

Referring back to Figure 2, the weights, computed in accordance with the similarity of the current block B and the adjacent blocks $B_1$ to $B_8$, are provided to the correlation computing unit 232, and the correlation computing unit 232 computes a correlation using the following formula 2:

[Formula 2]

$$C(v_c) = \frac{1}{D(v_c)} = \frac{1}{\sum_k w_k |v_c - v_k|}, \quad k = 1,2,3,\ldots,M$$

in which, $C(v_c)$ is a correlation of the respective candidate motion vectors and the motion vectors of the adjacent blocks $B_1$ to $B_8$, $w_k$ is a weight, $v_c$ is a candidate motion vector, $v_k$ is a motion vector of an adjacent block $B_1$ to $B_8$, and M is the number of adjacent blocks $B_1$ to $B_8$. Because Formula 2 is similar to Formula 1, which has been described above except for the weight allocation, explanation of Formula 2 will be omitted. It should be noted that the motion vectors of blocks B1 to B4 are selected candidate motion vectors obtained previously using Formula 2 whereas the motion vectors of blocks B5 to B8 are simply the motion vectors obtained by determining the respective minimum SADs, not motion vectors selected from candidate motion vectors, because the candidate selection process for these blocks has not yet taken place.

In addition to the current frame, the weight allocating unit 234 can compute a weight to allocate to Formula 2 by determining the similarity between the blocks B, $B_1'$ to $B_8'$ of the previous frame, which are stored in advance.

The final motion vector estimating unit 236 determine the candidate motion vector having the maximum correlation among the correlations computed in accordance with Formula 2 to be a final motion vector of the current block B. The final motion vector of the respective blocks are temporarily stored in the buffer 240 in the frame unit.

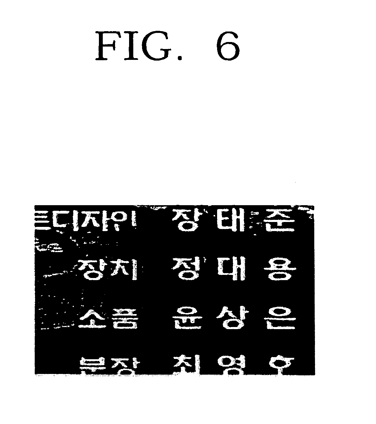

With the motion estimation apparatus 200, according to the first exemplary embodiment of the present invention, an image with reduced block artefacts can be provided as shown in Figure 6.

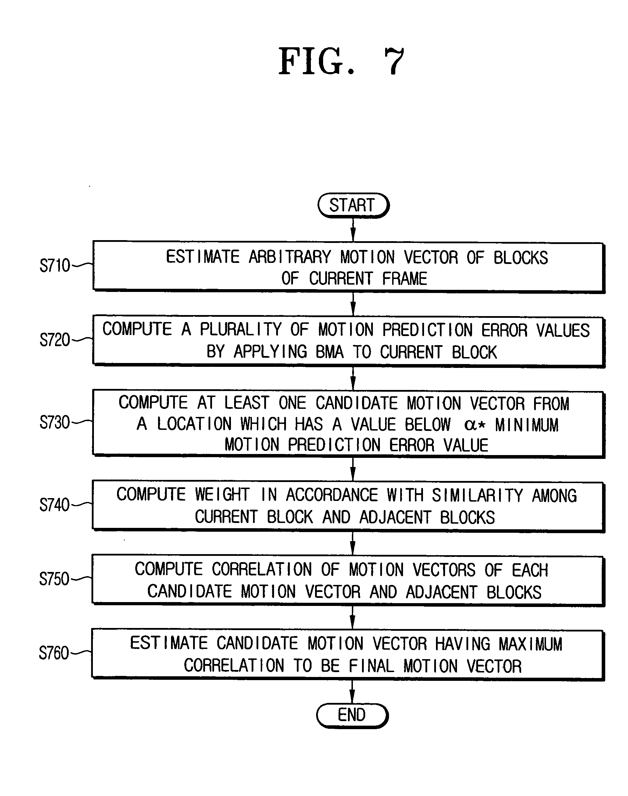

Referring to Figures 2 to 7, the full search unit 210 divides the current frame into blocks of a predetermined size and estimates the motion vectors of the blocks using the full search BMA (step S710). In completing S710, the candidate motion vector estimating unit 220 computes a plurality of motion prediction error values such as SADs, by re-applying the BMA to the current block B (step S720).

From a location having a SAD below a predetermined threshold, the candidate motion vector estimating unit 220 identifies at least one candidate motion vector for the compensation of the current block B (step S730). The predetermined threshold of S730 is the value obtained by multiplying the minimum SAD by a predetermined constant and, in the present embodiment, $a = 1.5$ is applied as the predetermined threshold.

In completing S730, the weight allocating unit 234 computes a weight in accordance with the similarity between the current block B and the adjacent blocks $B_1$ to $B_8$ (step S740).

The correlation computing unit 232 computes the correlation between the respective candidate motion vectors and the motion vectors of the adjacent blocks $B_1$ to $B_8$, considering the weight which is computed and allocated in S740 (step S750). That is, the correlation computing unit 232 computes a correlation using Formula 2, considering not only the spatial correlation but also the temporal correlation.

In completing S750, the final motion vector estimating unit 236 identifies the candidate motion vector, having the maximum correlation among the candidate motion vectors, to be the final motion vector (step S760). Accordingly, the final motion vector, which is the result of compensating the arbitrary motion vector estimated in S710 for the current block, is generated.

In the motion estimation method according to the first exemplary embodiment of the present invention, S740 may be omitted if the similarity between the current block B and the adjacent blocks $B_1$ to $B_8$ is not to be considered, and it is preferable that S750 computes the correlations using Formula 1.

With the motion estimation method according to the first exemplary embodiment of the present invention, images with reduced block artefact can be provided as shown in Figure 6.

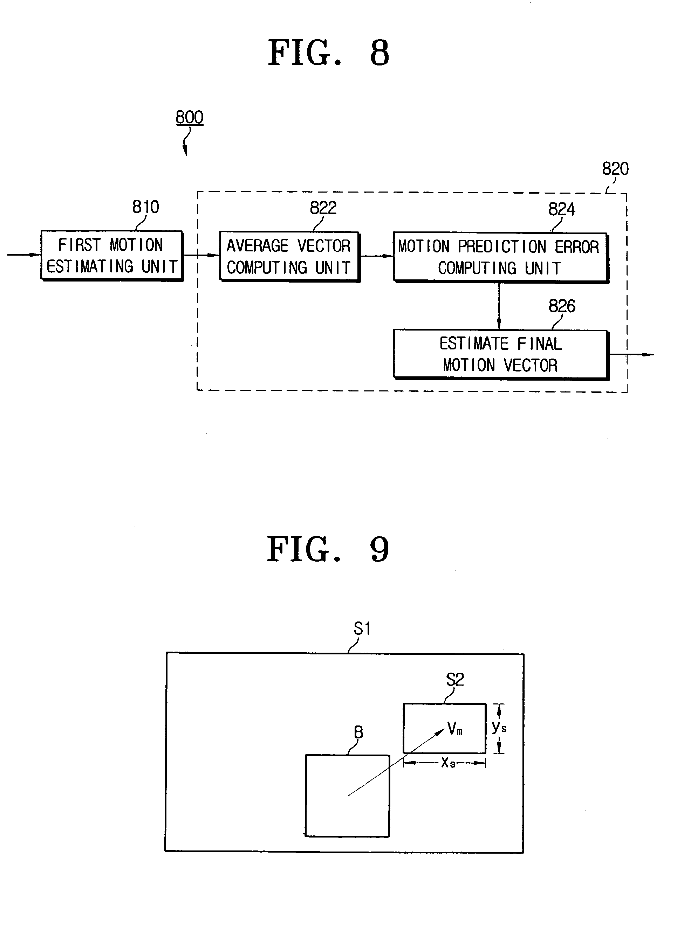

Referring to Figure 8, the motion estimation apparatus 800 considering correlation between the blocks in a second exemplary embodiment of the present invention, includes a first motion estimation unit 810 and a second motion estimation unit 820.

The first motion estimation unit 810 divides the currently-input frame (hereinafter briefly called a 'current frame') into blocks of predetermined size and estimates motion vectors for the blocks. To describe it in greater detail, the first motion estimation unit 810 computes a plurality of SADs by applying the BMA to the respective blocks of the current frame. The first motion estimation unit 810 then estimates the motion vectors of the respective blocks from a location having the minimum SAD. For example, the first motion estimation unit 810 sets a first search range S1 of a predetermined size with reference to the current block B and estimates a motion vector for the current block B by full search BMA.

The second motion estimation unit 820 sets a second search range S2 of a predetermined size, using the motion vectors of the current block B and at least one adjacent block (not shown) of the current block B. The second motion estimating unit 820 estimates a final motion vector of the current block B, by re-applying the BMA to the second search range S2 with respect to the current block B. Accordingly, the second motion estimating unit 820 includes an average vector computing unit 822, a motion prediction error computing unit 824 and a final motion vector estimating unit 826.

The average vector computing unit 822 computes an average vector of the motion vectors of the current block B and at least one adjacent block (not shown) with the following Formula 3. The average vector is obtained by averaging the vertical and horizontal properties of the motion vectors of the current block B and the adjacent block (not shown). The adjacent block (not shown) refers to a block which is adjacent to the current block B and located in the same current frame as the current block B.

[Formula 3]

$$v_m = \frac{1}{N}\sum_{k=0}^{N-1} v_k$$

in which, $v_m$ is an average vector of the motion vectors of the current block B and at least one adjacent block (not shown), N is the number of the current block B and at least one adjacent block (not shown), and $v_k$ is the motion vector of the current block B and at least one adjacent block (not shown) which is estimated at the first motion estimating unit 810.

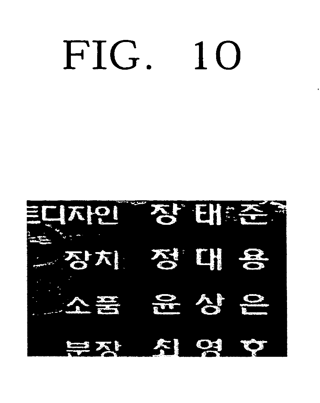

As shown in Figure 9, the motion prediction error computing unit 824 sets the second search range S2 with respect to the average vector, and computes a plurality of motion prediction error values such as a SAD by applying the BMA. The second search range S2 is smaller than the first search range S1 and it may be that the second search range S2 be set with its size at design time.

The size of the second search range S2 may be adjusted adaptively, i.e., in accordance with the correlation between the motion vectors of the adjacent blocks. That is, if the adjacent vectors represent the same direction, the second search range S2 may be reduced in size, and if not, i.e. if the adjacent vectors represent different directions, the second search range S2 may be expanded. Expanding and contracting the second search range S2 may also be adjusted separately in the horizontal direction $x_s$ and vertical direction $y_s$. Further, expanding and contracting the second search range S2 may also be adjusted adaptively at the motion prediction error computing unit 824 in accordance with the mechanism as designed.

The final motion vector estimating unit 826 estimates the final motion vector of the current block B, from the location which corresponds to the minimum SAD among the plurality of SADs that are computed by the motion prediction error computing unit 824.

With the motion estimation apparatus 800 of the second exemplary embodiment of the present invention, the second search range S2, which is contracted with respect to the average vector, is set, and the final motion vector is estimated by re-applying the BMA. In other words, the area, which has a high possibility of having the actual movement, is predicted using the average vector, and such a predicted area is contracted and the final motion vector of the current block B is estimated in the contracted search range. As a result, because the area having the high possibility of having actual movement is predicted by average vector and contracted, possible error in motion estimation is prevented.

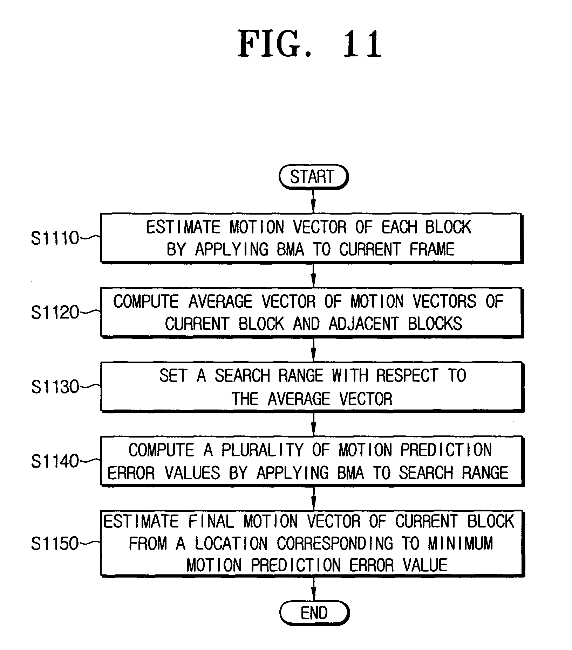

Referring to Figures 8 to 11, the first motion estimation unit 810 divides the currently-input frame, i.e. the current frame, into blocks of a predetermined size and estimates the motion vectors of the blocks by the BMA (step S1110). For example, the first motion estimation unit 810 sets a first search range S1 with respect to the current block B and estimates a motion vector for the current block B by the full search BMA.

In completing S1110, the average vector computing unit 822 computes an average vector of the motion vectors of the current block B and at least one adjacent block using Formula 3 (step S1120). Next, the motion prediction error computing unit 824 sets a second search range (S2) with respect to the average vector (step S1130), and computes a plurality of motion prediction error values such as a SAD by re-applying the BMA (step S1140). Here, the second search range S2 is contracted to be smaller than the first search range S1, and preferably, included in the first search range S1.

In completing S1140, the final motion vector estimating unit 826 determines the final motion vector of the current block B, from the location which corresponds to the minimum SAD among the plurality of computed SADs (step S1150).

With the motion estimation apparatus 800 and the method of the second exemplary embodiment of the present invention, images with reduced block artefact can be provided as shown in Figure 10.

As described so far, with the motion estimation apparatus and method thereof, which considers a correlation between the blocks, motion vectors of the blocks, which may be estimated inaccurately, can be compensated/estimated accurately by using the motion vectors of the adjacent blocks. In the case of having similar movement in two adjacent blocks, inaccurately-estimated motion vector can be compensated to a motion vector close to the actual movement, and visually-pleasant, naturally-interpolated images can be provided. Especially by applying the present invention to the IPC and FRC, occurrence of block artefact can be prevented or restrained, and as a result, image quality improves.

## Claims

1. A method of block motion vector estimation for a video signal, **characterised by** comparing candidate motion vectors for a current block with motion vectors of neighbouring blocks and selecting a candidate motion vector as the final motion vector estimation for said current block in dependence on the result of said comparison.

2. A method according to claim 1, wherein the motion vectors of neighbouring blocks are determined by determining the most similar block in the preceding field or frame, e.g. the motion vector producing the minimum SAD.

3. A method according to claim 1, wherein the motion vectors of some of the neighbouring blocks are determined by determining the most similar block in the preceding field or frame, e.g. the motion vector producing the minimum SAD, and the motion vectors of others of the neighbouring blocks are obtained previously by comparing candidate motion vectors for a current block with motion vectors of neighbouring blocks and selecting a candidate motion vector as the final motion vector estimation for said current block.

4. A method according to claim 1, 2 or 3, wherein said comparing of candidate motion vectors for a current block with motion vectors of neighbouring blocks comprises determining the candidate motion vector for which the motion vectors of the neighbouring blocks exhibit the minimum mean, which may be a weighted mean, deviation.

5. A block motion vector estimator **characterised by** means (200) configured for performing a method according to claim 1.

6. A motion estimation apparatus which considers a correlation between blocks, comprising:

   a full search unit to divide a current frame/field into blocks of a predetermined size, and estimate an arbitrary motion vector of each block by a full search algorithm;
   a candidate motion vector estimating unit to compute a plurality of motion prediction error values by applying a block matching algorithm (BMA) to a current block of the blocks for motion estimation, and estimate at least one candidate motion vector from the motion prediction error value below a predetermined threshold, for motion compensation of the current block; and
   a motion compensating unit to compute a correlation between the respective candidate motion vectors and the motion vectors of adjacent blocks which are adjacent to the current block, and compensate one among the candidate motion vectors to a final motion vector of the current block based on the computed correlation.

7. The motion estimation apparatus of claim 6, wherein the full search unit computes the plurality of motion prediction error values by applying the BMA with respect to the respective blocks of the current frame/field, and estimates the arbitrary motion vector of the respective blocks from a location which has a minimum motion prediction error value.

8. The motion estimation apparatus of claim 6, wherein the candidate motion vector estimating unit sets a search range of a predetermined size in a previous frame/field which is prior to the current block, computes the plurality of motion prediction error values by applying the BMA with respect to the search range, and sets the predetermined threshold by multiplying a minimum value among the plurality of motion prediction error values by a predetermined constant.

9. The motion estimation apparatus of claim 6, wherein the motion compensating unit comprises:

a correlation computing unit to compute a correlation between the respective candidate motion vectors and the motion vectors of the adjacent blocks adjacent to the current block; and
a final motion vector estimating unit to estimate a candidate motion vector having a maximum correlation among the respective candidate motion vectors to be the final motion vector.

10. The motion estimation apparatus of claim 9, wherein the correlation computing unit computes the correlation by,

$$C(v_c) = \frac{1}{\sum_k |v_c - v_k|}, \quad k = 1,2,3,...,M$$

in which, $C(v_c)$ is a correlation between the candidate motion vectors and the motion vectors of the adjacent blocks, $v_c$ is the candidate motion vectors, $v_k$ is a motion vector of the adjacent blocks, and M is the number of adjacent blocks.

11. The motion estimation apparatus of claim 9, wherein the correlation computing unit computes the correlation in consideration of a temporal direction, by including a previous block of a previous frame/field which corresponds in relative location with the current block and at least one block adjacent to the previous block into the adjacent blocks, the previous frame/field being inputted prior to the current frame/field.

12. The motion estimation apparatus of claim 9, wherein the motion compensating unit further comprises a weight allocating unit to allocate a predetermined weight in accordance with a similarity between the current block and the adjacent blocks, and
the correlation computing unit computes the correlation with the weight applied thereto, by,

$$C(v_c) = \frac{1}{\sum_k w_k |v_c - v_k|}, \quad k = 1,2,3,...,M$$

in which, $C(v_c)$ is a correlation of the respective candidate motion vectors and the motion vectors of the adjacent blocks, $w_k$ is the weight, $v_c$ is the candidate motion vector, $v_k$ is the motion vector of the adjacent blocks, and M is the number of adjacent blocks.

13. The motion estimation apparatus of claim 6, wherein the motion prediction error value is computed by one among a sum of absolute difference (SAD), a mean absolute difference (MAD) and a mean square error (MSE).

14. A motion estimation method which considers a correlation between blocks, comprising:

a full search step of dividing a current frame/field into blocks of a predetermined size, and estimating an arbitrary motion vector of each block by a full search algorithm;
a candidate motion vector estimating step of computing a plurality of motion prediction error values by applying a block matching algorithm (BMA) to a current block of the blocks for motion estimation, and estimating at least one candidate motion vector from a motion prediction error value below a predetermined threshold, for motion compensation of the current block;
a motion compensating step of computing a correlation between the respective candidate motion vectors and the motion vectors of adjacent blocks which are adjacent to the current block; and
a final motion vector estimating step of estimating a candidate motion vector having a maximum correlation to be a final motion vector of the current block.

**15.** The motion estimation method of claim 14, wherein the full search step computes the plurality of motion prediction error values by applying the BMA with respect to the respective blocks of the current frame/field, and estimates the arbitrary motion vector of the respective blocks from a location which has a minimum motion prediction error value.

**16.** The motion estimation method of claim 14, wherein the candidate motion vector estimating step sets a search range of a predetermined size in a previous frame/field which is prior to the current block, computes the plurality of motion prediction error values by applying the BMA with respect to the search range, and sets the predetermined threshold by multiplying a minimum value among the plurality of motion prediction error values by a predetermined constant.

**17.** The motion estimation method of claim 14, wherein the correlation computing step computes the correlation by,

$$C(v_c) = \frac{1}{\sum_k |v_c - v_k|}, \quad k = 1,2,3,...,M$$

in which, $C(v_c)$ is a correlation between the candidate motion vectors and the motion vectors of the adjacent blocks, $v_c$ is the candidate motion vectors, $v_k$ is a motion vector of the adjacent blocks, and M is the number of adjacent blocks.

**18.** The motion estimation method of claim 17, wherein the correlation computing step computes the correlation in consideration of a temporal direction, by including a previous block of a previous frame/field which corresponds in relative location with the current block and at least one block adjacent to the previous block into the adjacent blocks, the previous frame/field being inputted prior to the current frame/field.

**19.** The motion estimation method of claim 14, wherein, prior to the correlation computing step, further comprising a weight allocating step of allocating a predetermined weight in accordance with a similarity between the current block and the adjacent blocks, and
the correlation computing step computes the correlation with the weight applied thereto, by,

$$C(v_c) = \frac{1}{\sum_k w_k |v_c - v_k|}, \quad k = 1,2,3,...,M$$

in which, $C(v_c)$ is a correlation of the respective candidate motion vectors and the motion vectors of the adjacent blocks, $w_k$ is the weight, $v_c$ is the candidate motion vector, $v_k$ is the motion vector of the adjacent blocks, and M is the number of adjacent blocks.

**20.** The motion estimation method of claim 14, wherein the motion prediction error value is computed by one among a sum of absolute difference (SAD), a mean absolute difference (MAD) and a mean square error (MSE).

**21.** A motion estimation apparatus which considers a correlation between blocks, comprising:

a first motion estimating unit to divide an input frame/field into blocks of a predetermined size, and estimate a motion vector of each block; and
a second motion estimating unit to set a first search range of a predetermined size based on the motion vector of a current block for motion estimation, and the motion vector of at least one adjacent block which is adjacent to the current block, and estimate a final motion vector of the current block by applying a block matching algorithm (BMA) with respect to the first search range based on the current block.

**22.** The motion estimation apparatus of claim 21, wherein the second motion estimating unit comprises:

an average vector computing unit to compute an average vector of the motion vectors of the current block and at least one adjacent block;

a motion prediction error computing unit to set the first search range based on the computed average vector, and compute a plurality of motion prediction error values by applying the BMA; and

a final motion vector estimating unit to estimate a final motion vector of the current block from a location which corresponds to a minimum motion prediction error value among the plurality of motion prediction error values as computed.

**23.** The motion estimation apparatus of claim 22, wherein the motion prediction error value is computed by one among a sum of absolute difference (SAD), a mean absolute difference (MAD) and a mean square error (MSE).

**24.** The motion estimation apparatus of claim 21, wherein the first motion estimating unit sets a second search range of a predetermined size with respect to the respective divided blocks, and estimates the motion vectors of the respective divided blocks by the BMA.

**25.** The motion estimation apparatus of claim 24, wherein the first search range has a size smaller than the second search range.

**26.** A motion estimation method based on a correlation between blocks, comprising:

a first motion estimating step of dividing an input frame/field into blocks of a predetermined size, and estimating a motion vector of each block; and

a second motion estimating step of setting a first search range of a predetermined size based on a motion vector of a current block for motion estimation, and a motion vector of at least one adjacent block which is adjacent to the current block, and estimating a final motion vector of the current block by applying a block matching algorithm (BMA) with respect to the first search range based on the current block.

**27.** The motion estimation method of claim 26, wherein the second motion estimating step comprises:

an average vector computing step of computing an average vector of the motion vectors of the current block and at least one adjacent block;

a motion prediction error computing step of setting the first search range based on the computed average vector, and computing a plurality of motion prediction error values by applying the BMA; and

a final motion vector estimating step of estimating a final motion vector of the current block from a location which corresponds to a minimum motion prediction error value among the plurality of motion prediction error values as computed.

**28.** The motion estimation method of claim 27, wherein the motion prediction error value is computed by one among a sum of absolute difference (SAD), a mean absolute difference (MAD) and a mean square error (MSE).

**29.** The motion estimation method of claim 26, wherein the first motion estimating step sets a second search range of a predetermined size with respect to the respective divided blocks of the frame/field, and estimates the motion vectors of the respective divided blocks by the BMA.

**30.** The motion estimation method of claim 29, wherein the first search range has a size smaller than the second search range.

# FIG. 1

# FIG. 2

```
        210                  220              230      232                      236        200

┌──────────────┐   ┌──────────────────────┐   ┌─ ─ ─ ┌─────────────┐ ─ ─ ─ ─ ─ ─ ─┌──────────────────┐ ─ ─ ┐
│ FULL SEARCH  │──▶│ CANDIDATE MOTION VECTOR │──▶│    │ CORRELATION │──────────────▶│ FINAL MOTION VECTOR │──▶
│     UNIT     │   │   ESTIMATING UNIT     │   │    │ COMPUTING UNIT │◀──           │  ESTIMATING UNIT   │
└──────────────┘   └──────────────────────┘   │    └─────────────┘     │          └──────────────────┘    │
                                               │           ▲            │                   │
                                               │        234 │           │              240  │
                                               │    ┌───────────────┐   │          ┌──────────────┐
                                               │    │    WEIGHT     │   └──────────│    BUFFER    │
                                               │    │ ALLOCATING UNIT │             └──────────────┘
                                               │    └───────────────┘   │
                                               └─ ─ ─ ─ ─ ─ ─ ─ ─ ─ ─ ─ ┘
```

# FIG. 3

# FIG. 4

EP 1 503 599 A2

# FIG. 5

14

# FIG. 6

# FIG. 7

START

S710 — ESTIMATE ARBITRARY MOTION VECTOR OF BLOCKS
OF CURRENT FRAME

S720 — COMPUTE A PLURALITY OF MOTION PREDICTION ERROR VALUES
BY APPLYING BMA TO CURRENT BLOCK

S730 — COMPUTE AT LEAST ONE CANDIDATE MOTION VECTOR FROM
A LOCATION WHICH HAS A VALUE BELOW $\alpha*$ MINIMUM
MOTION PREDICTION ERROR VALUE

S740 — COMPUTE WEIGHT IN ACCORDANCE WITH SIMILARITY AMONG
CURRENT BLOCK AND ADJACENT BLOCKS

S750 — COMPUTE CORRELATION OF MOTION VECTORS OF EACH
CANDIDATE MOTION VECTOR AND ADJACENT BLOCKS

S760 — ESTIMATE CANDIDATE MOTION VECTOR HAVING MAXIMUM
CORRELATION TO BE FINAL MOTION VECTOR

END

# FIG. 8

# FIG. 9

# FIG. 10

# FIG. 11

START

S1110 — ESTIMATE MOTION VECTOR OF EACH BLOCK
BY APPLYING BMA TO CURRENT FRAME

S1120 — COMPUTE AVERAGE VECTOR OF MOTION VECTORS OF
CURRENT BLOCK AND ADJACENT BLOCKS

S1130 — SET A SEARCH RANGE WITH RESPECT TO
THE AVERAGE VECTOR

S1140 — COMPUTE A PLURALITY OF MOTION PREDICTION
ERROR VALUES BY APPLYING BMA TO SEARCH RANGE

S1150 — ESTIMATE FINAL MOTION VECTOR OF CURRENT BLOCK
FROM A LOCATION CORRESPONDING TO MINIMUM
MOTION PREDICTION ERROR VALUE

END